Europäisches Patentamt

European Patent Office

Office européen des brevets

(19)

(11) **EP 1 265 401 A1**

(12) **EUROPEAN PATENT APPLICATION**
published in accordance with Art. 158(3) EPC

(43) Date of publication:
**11.12.2002 Bulletin 2002/50**

(51) Int Cl.⁷: **H04L 12/40**

(21) Application number: **01900276.5**

(22) Date of filing: **09.01.2001**

(86) International application number:
**PCT/JP01/00043**

(87) International publication number:
**WO 02/056546 (18.07.2002 Gazette 2002/29)**

(84) Designated Contracting States:
**AT BE CH CY DE DK ES FI FR GB GR IE IT LI LU
MC NL PT SE TR**

(71) Applicant: **MITSUBISHI DENKI KABUSHIKI
KAISHA
Tokyo 100-8310 (JP)**

(72) Inventor: **TAKEUCHI, Shinji,
Mitsubishi Denki K.K.
Tokyo 100-8310 (JP)**

(74) Representative: **Pfenning, Meinig & Partner
Mozartstrasse 17
80336 München (DE)**

(54) **DATA TRANSMISSION SYSTEM**

(57)    A data transfer system is configured such that data collision detection and data transmission are performed using different lines to eliminate the need for employing a wired-OR circuit, or the number of reception buffers to be employed is reduced. These arrangements make it possible to realize a high-speed serial bus with reduced power consumption.

## FIG.3

## Description

TECHNICAL FIELD

The present invention relates to a serial data transfer system as represented by the HDLC.

BACKGROUND ART

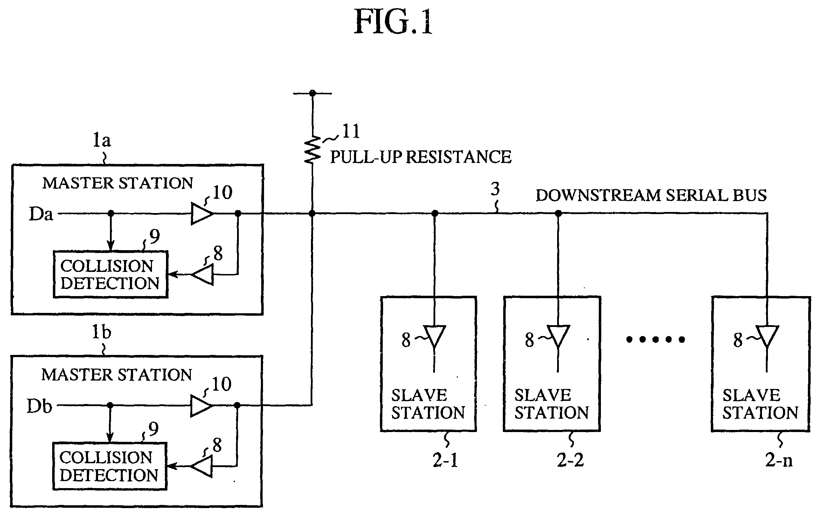

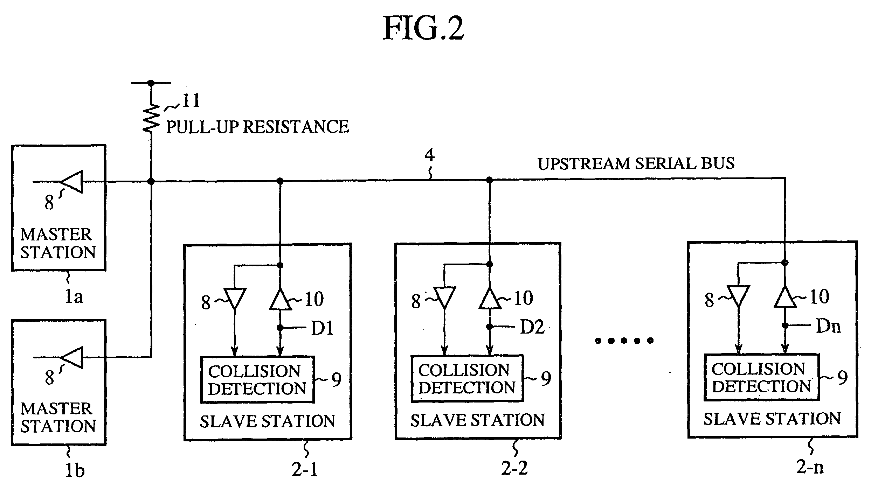

Figs. 1 and 2 show the configurations of a downstream serial data transfer system and an upstream serial data transfer system, respectively, employing a same conventional hardware configuration having two master stations and n number of slave stations. In the figures, reference numerals 1a and 1b each denotes a master station; 2-1 to 2-n (n is a natural number) each denotes a slave station; 3 denotes a downstream serial bus; 4 denotes an upstream serial bus; 8 denotes a buffer; 9 denotes a data collision detection circuit; 10 denotes an open drain buffer; and 11 denotes a pull-up resistance.

In the downstream data transfer shown in Fig. 1, the master stations 1a and 1b output data Da, and the slave stations 2-1 to 2-n receive the data Da. In the upstream data transfer shown in Fig. 2, on the other hand, the slave stations 2-1 to 2-n output data D1 to Dn, respectively, and the master stations 1a and 1b receive the data D1 to Dn. In this case, one of the master stations 1a and 1b outputs a CLK signal (not shown).

The operation will be described below.

In the case of the downstream data transfer, data generation circuits (not shown) in the master stations 1a and 1b shown in Fig. 1 send out data Da and Db to the downstream serial bus 3 by way of the open drain buffers 10. The data is then input to the n slave stations 2-1 to 2-n through the downstream serial bus 3, which forms a wired-OR circuit with the pull-up resistance 11. Since the master stations 1a and 1b each independently transmits the data at that time, the data collision detection circuits 9 are provided to monitor any occurrence of bus contention.

A general data collision detection circuit employed as the data collision detection circuit 9 detects occurrence of bus contention when the data on the bus is at a low level if the data output from the circuit itself is at a high level. Upon detecting contention on the data bus, the master stations 1a and 1b set the output of the open drain buffers 10 at a high level for a predetermined time to pause the transmission and then retransmit the data in order to avoid bus contention.

Similarly, in the case of the upstream data transfer, data generation circuits (not shown) in the slave stations 2-1 to 2-n shown in Fig. 2 send out data D1 to Dn to the serial bus 4 by way of the open drain buffers 10. The data is then input to the master stations 1a and 1b through the upstream serial bus 4, which forms a wired-OR circuit with the pull-up resistance 11. Since the slave stations 2-1 to 2-n each independently transmit the data D1 to Dn at that time, the data collision detection circuits 9 are provided to monitor any occurrence of bus contention. Each data collision detection circuit 9 compares a respective one of D1 to Dn (which is input to an open drain buffer 10) with the output of the open drain buffer 10 obtained through a buffer 8. If they are not equal, the data collision detection circuit 9 determines that data collision has occurred.

Configured as described above, the conventional serial data transfer system employs a wired-OR system using the pull-up resistance 11 and therefore has a problem in that it has increased power consumption and a reduced serial bus transmission speed.

Recently, a device having a bus hold circuit therein has been increasingly used as an input buffer for an element supporting the hot swap/socketting. The bus hold circuit provides a function to hold an immediately previous logic level even after the input of the device has been brought into an electrically floating state. Since it is necessary to drive the device by a certain current in a neighborhood of the threshold voltage at which the input logic changes, the pull-up resistance 11 must have a pull-up resistance value R expressed by the following formula:

$$R = (Vcc - Vth) / n * Ihold, \qquad (1)$$

where R denotes a pull-up resistance value, Vcc denotes a power voltage value, Vth denotes a threshold voltage value, n denotes the number of input devices, and Ihold denotes a voltage value needed to release the bus hold.

It should be noted that the pull-up resistance value R is inversely proportional to the number n of the input devices, which is equal to the number of the slave stations. Therefore, in the drive method employed by the conventional data transfer system shown in Figs. 1 and 2, as the number of the slave stations increases, the pull-up resistance value R decreases and as a result the power consumption increases.

On the other hand, if the data line pulled up with a resistance is driven by open drain devices such that the logic level changes from a low level to a high level, the resultant charging curve has a time constant due to the influence of the stray capacitance. Furthermore, as the number of the slave stations increases, the stray capacitance becomes larger, increasing the time constant, which leads to reduced maximum data transfer speed if the value of the pull-up resistance 11 is unchanged. To solve this problem, the pull-up resistance value R may be reduced. However, even though such a method can increase the maximum transfer speed, it has a problem in that the power consumption becomes larger.

The present invention has been devised to solve the above problems. Therefore, it is an object of the present invention to provide a data transfer system capable of transferring data at high speed with reduced power consumption.

## DISCLOSURE OF THE INVENTION

The data transfer systems of the present invention are characterized in that: the data line used to transmit data from the master stations to the slave stations and the line used to detect bus contention between the master stations are set independently of each other; or the data line used to transmit data from the slave stations to the master stations and the line used to detect bus contention between the slave stations are. set independently of each other.

Specifically, according to the present invention, a data transfer system includes: a first master station, a second master station, and a plurality of slave stations connected to the first master station and the second master station through a serial bus, wherein the first master station includes: a first logical OR circuit for, from the outside, receiving first data and further receiving second data through a buffer; and a first collision detection circuit for comparing an output of the first logical OR circuit with the first data to carry out data collision detection, whereby the first master station sends out the output of the first logical OR circuit through a first tristate buffer; wherein the second master station includes: a second logical OR circuit for, from the outside, receiving the second data and further receiving the first data through a buffer; and a second collision detection circuit for comparing an output of the second logical OR circuit with the second data to carry out data collision detection, whereby the second master station sends out the output of the second logical OR circuit through a second tristate buffer; and wherein the first master station and the second station serially transmit the first data and the second data to the plurality of slave stations through the serial bus while carrying out data collision detection between the first master station and the second master station.

Further, according to the present invention, one of the first logical OR circuit and the second logical OR circuit performs logical OR operation on output data from one of the first master station and the second master station which does not include the one of the first logical OR circuit and the second logical OR circuit before the first master station and the second master station transmit the first data and the second data.

Still further, according to the present invention, a data transfer system includes: a first master station including a first collision detection circuit; a second master station including a second collision detection circuit; and a plurality of slave stations including logical OR circuits connected to the first master station through a buffer and a serial bus; wherein in order to carry out data collision detection, the first collision detection circuit compares first data with second data obtained through a buffer, and the second collision detection circuit compares the second data with the first data obtained through a buffer.

Still further, according to the present invention, the first master station and the second master station detect data collision therebetween and each of the first master station and the second master station independently transmit data to the plurality of slave stations, and the logical OR circuits included in the plurality of slave stations perform logical OR operation.

Still further, according to the present invention, a data transfer system includes: a plurality of slave stations including collision detection circuits; a master station including a tristate buffer; a first signal line for serially transmitting internal data from the plurality of slave stations to the master station; and a second signal line connected to the collision detection circuits; wherein in order to detect data collision between the plurality of slave stations, the collision detection circuits compare external data with a collision detecting signal transferred to the plurality of slave stations through the tristate buffer included in the master station.

Still further, according to the present invention, the data transfer system further comprises a pull-up resistance connected to the first signal line.

Still further, according to the present invention, the master station includes a logical OR circuit for performing logical OR operation on data transmitted from the plurality of slave stations.

Still further, according to the present invention, the first signal line includes a plurality of lines each independently connecting the plurality of slave stations and the master station.

Configured as described above, the present invention is capable of transferring data at high speed with reduced power consumption regardless of the number of slave stations employed in the serial transmission from the master stations to the slave stations or from the slave stations to the master stations.

## BRIEF DESCRIPTION OF THE DRAWINGS

Fig. 1 is a block diagram of a conventional downstream serial data transfer system.

Fig. 2 is a block diagram of a conventional upstream serial data transfer system.

Fig. 3 is a block diagram showing a serial data transfer system having a basic configuration of the present invention.

Fig. 4 is a block diagram showing a downstream serial data transfer system according to a first embodiment of the present invention.

Fig. 5 is a block diagram showing a downstream serial data transfer system according to a second embodiment of the present invention.

Fig. 6 is a block diagram showing an upstream serial data transfer system according to a third embodiment of the present invention.

Fig. 7 is a block diagram showing an upstream serial data transfer system according to a fourth embodiment of the present invention.

## BEST MODE FOR CARRYING OUT THE INVENTION

In order to explain the present invention in more detail, the best mode for carrying out the present invention will now be described with reference to the accompanying drawings.

Basic Configuration of the Invention

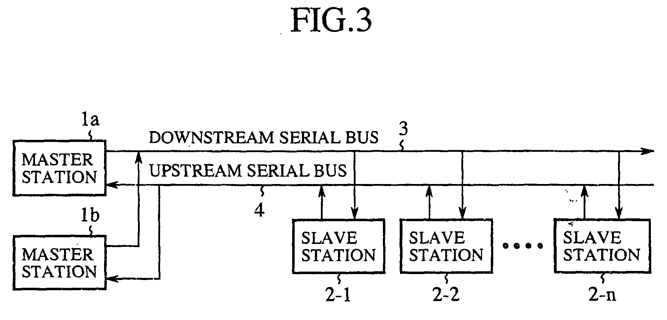

Fig. 3 is a block diagram showing a serial data transfer system having a basic configuration of the present invention. In the figure, reference numerals 1a and 1b each denotes a master station; 2-1 to 2-n each denotes a slave station; and 3 and 4 each denotes a serial bus. It should be noted that hereinafter reference numeral n indicates a natural number.

The operation will be described below.

In the case of the downstream data transfer, the master stations 1 (1a and 1b) acting as the transmitting stations transmit a signal to the slave stations 2-1 to 2-n acting as the receiving stations by use of the serial bus 3. Concurrently, the master stations 1a and 1b (having the same hardware configuration) mutually carry out data collision detection.

In the case of the upstream data transfer, the slave stations 2-1 to 2-n acting as the transmitting stations transmit a signal to the master stations 1 acting as the receiving stations by use of the serial bus 4. Concurrently, the slave stations 2-1 to 2-n carry out data collision detection between them.

The above embodiment of the present invention will be described below in detail with reference to accompanying drawings.

First Embodiment

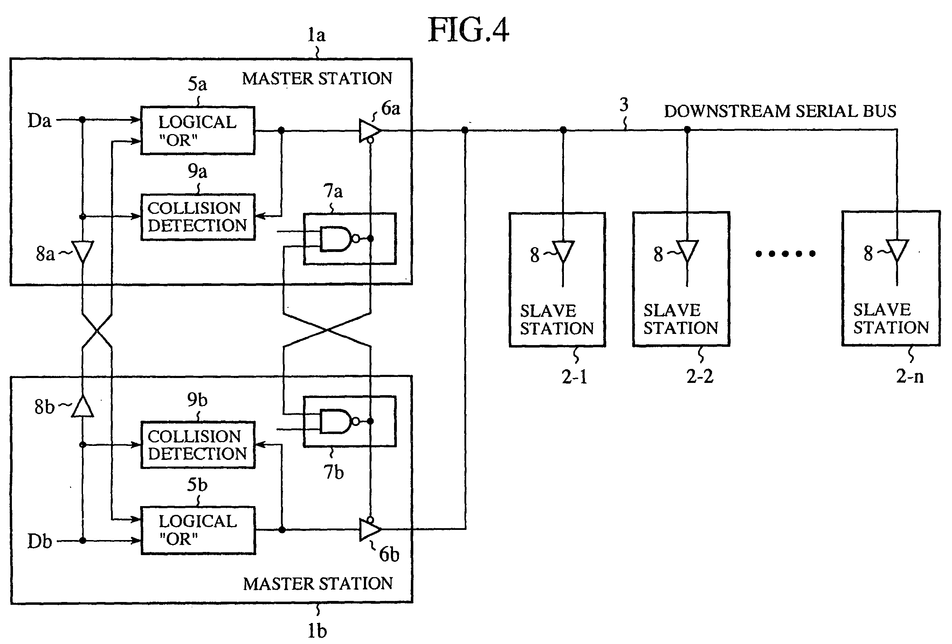

Fig. 4 is a block diagram showing a downstream data transfer system according to a first embodiment of the present invention. In the figure, reference numerals 1a and 1b each denotes a master station; 2-1 to 2-n each denotes a slave station (n is a natural number) ; 3 denotes a downstream serial bus; 5a and 5b each denotes a logical OR circuit (a first logical OR circuit and a second logical OR circuit); 6a and 6b each denotes a tristate buffer; 8, 8a, and 8b each denotes a buffer; and 9a and 9b each denotes a data collision detection circuit (a first collision detection circuit and a second collision detection circuit).

The operation will be described below.

The master station 1a inputs data D1 (first data) from its data generation circuit (not shown) to one input of the logical OR circuit 5a as well as transmitting the data to the logical OR circuit 5b in the master station 1b by way of the buffer 8a. Data D2 (second data) generated from the data generation circuit (not shown) within the master station 1b is input to the other input of the logical OR circuit 5a whose output is output to the serial bus 3 by way of the tristate buffer 6a and input to the data collision detection circuit 9a.

Flip-flop circuits 7a and 7b are provided between the master stations 1a and 1b to carry out enable control of the tristate buffer 6a such that the tristate buffers cannot be enabled at the same time and therefore only one of them can be enabled at one time.

When the data collision detection circuit 9a has detected data collision, the transmission of the data is paused and then resumed after a predetermined time period. It should be noted that the data collision detection circuits 9a and 9b are configured such that they determine whether the data D1 and D2 from the data generation circuits (not shown) are equal to the outputs of the logical OR circuits 5a and 5b, respectively, to detect whether data collision has occurred.

As described above, the first embodiment is configured such that the master stations 1a and 1b include the logical OR circuits 5a and 5b, respectively, and when one of the two tristate buffers 7a and 7b is enabled, one (a corresponding one) of the logical OR circuits 5a and 5b is used for driving. This arrangement eliminates the need for employing a pull-up resistance (and reducing its resistance value R in order to obtain a certain drive current), realizing reduced power consumption and high-speed data transfer.

Second Embodiment

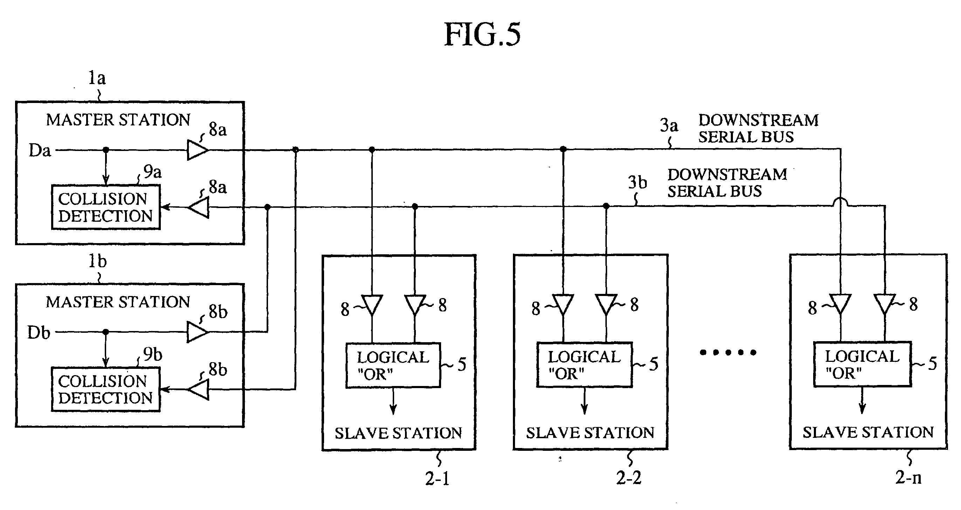

Fig. 5 is a block diagram showing a downstream data transfer system according to a second embodiment of the present invention. In the figure, reference numerals 1a and 1b each denotes a master station; 2-1 to 2-n each denotes a slave station; 3a and 3b each denotes a downstream serial bus; 5 denotes a logical OR circuit; 8, 8a, and 8b each denotes a buffer; and 9a and 9b each denotes a data collision detection circuit.

The operation will be described below.

Through a respective one of the downstream serial buses 3a and 3b collectively constituting a downstream signal line, the master stations 1a and 1b transmit data D1 and D2, respectively, from their data generation circuits (not shown) to each of the slave stations 2-1 to 2-n. Within the slave stations 2-1 to 2-n, the downstream serial data sent from the master stations 1a and 1b through each bus is input to the logical OR circuit 5 through a buffer 8. The slave stations 2-1 to 2-n each perform internal processing of the output of its logical OR circuit 5 as a downstream data signal. An example of the data collision detection carried out between the master stations 1a and 1b is as follows. The master station 1a receives downstream serial data from the other master station 1b through the buffer 8 within the master station 1a, and the data collision detection circuit 9a within the master station 1a compares the received downstream serial data with data transmitted by the master station 1a itself to perform collision detection.

According to the second embodiment described above, the "master stations 1a" side and the "master stations 1b" side are driven independently of each other, and the slave stations 2-1 to 2-n each include a logical OR circuit 5. Therefore, for example, no restriction is attached to the drive buffer on the "master station 1a" side, and the master station 1a can internally carry out "OR processing" of the output data of the other master station 1b With this arrangement, it is also possible to realize reduced power consumption and high-speed data transfer.

Third Embodiment

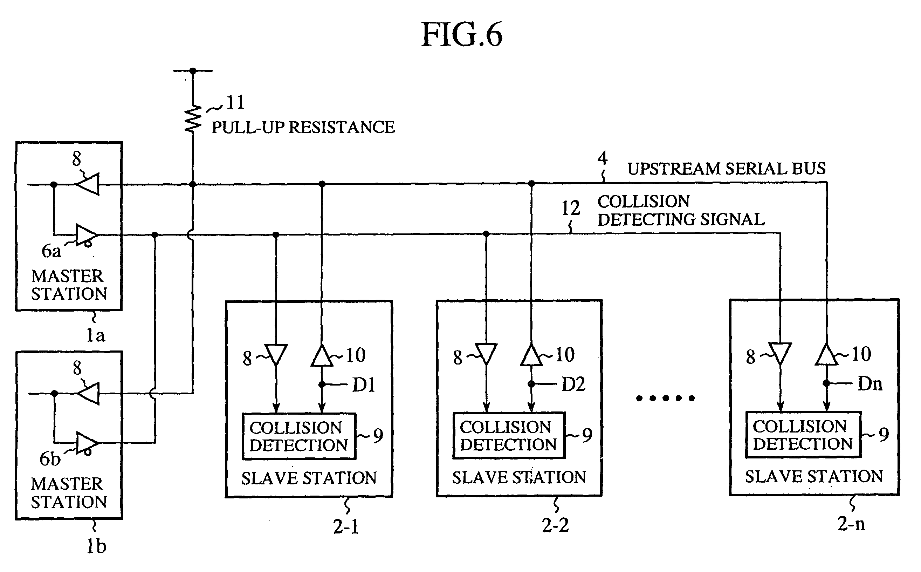

Fig. 6 is a block diagram showing an upstream data transfer system according to a third embodiment of the present invention. In the figure, reference numerals 1a and 1b each denotes a master station; 2-1 to 2-n each denotes a slave station; 4 denotes an upstream serial bus; 6a and 6b each denotes a tristate buffer; 8 denotes a buffer; 9 denotes a data collision detection circuit (collision detection circuit); and 12 denotes a collision detecting signal.

The operation will be described below.

The slave stations 2-1 to 2-n acting as the transmitting stations transmit external data D1 to Dn, respectively, to the master stations 1 acting as the receiving stations. In the upstream data (internal data) collision detection, data sent out from the slave stations 2-1 to 2-n to the upstream serial bus 4 is not directly used as the input data. Instead, n pieces of data sent through n lines are wired-ORed on the upstream serial bus 4 by use of a pull-up resistance 11 and input into the master stations 1a and 1b. The input data is passed through the buffers 8 within the master stations 1a and 1b and converted into the collision detecting signal 12 by the tristate buffers 6a and 6b. The signal is then input into the slave stations 2-1 to 2-n through the buffers 8 and used by each data collision detection circuit 9 to detect data collision.

With this arrangement, it is possible to reduce the number of buffers connected to the data line (having a wired-OR connection configuration) to be equal to the number of the employed master stations. The configuration of the conventional upstream serial data transfer system requires a number of buffers equal to the number of employed slave stations. It should be noted that it goes without saying that generally the number of the slave stations is larger than the number of the master stations.

In the upstream data transfer system of the third embodiment described above, the pull-up resistance 11 is connected to the serial bus 4 such that the number of input buffers to be connected to the data line (having a wired-OR connection configuration) can be reduced to be equal to the number of master stations employed. With this arrangement, it is possible to realize reduced power consumption and high-speed data transfer.

Fourth Embodiment

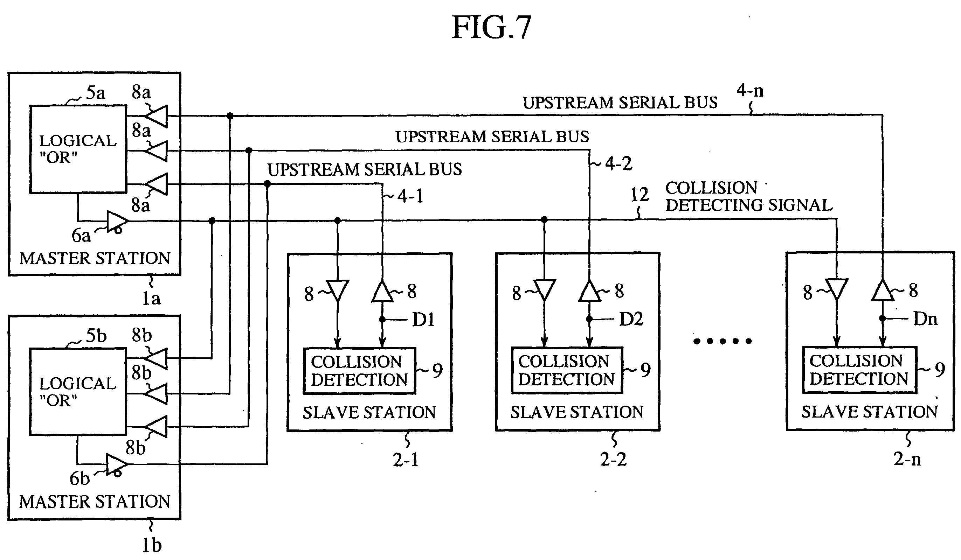

Fig. 7 is another block diagram showing an upstream data transfer system according to a fourth embodiment of the present invention. In the figure, reference numerals 1a and 1b each denote a master station; 2-1 to 2-n each denotes a slave station; 4-1 to 4-n each denotes an upstream serial bus; 5a and 5b each denotes a logical OR circuit; 6a and 6b each denotes a tristate buffer; 8, 8a, and 8b each denotes a buffer; 9 denotes a data collision detection circuit; and 12 denotes a collision detecting signal. This configuration is characterized in that the slave stations 2-1 to 2-n are each separately connected to a respective one of the upstream serial buses 4-1 to 4-n running from the stave stations 2-1 to 2-n to the master stations 1a and 1b.

The operation will be described below.

The slave stations 2-1 to 2-n transmit external data D1 to Dn from their data generation circuits to the upstream serial buses 4-1 to 4-n by way of the buffers 8, respectively. Then, by use of the logical OR circuits 5a and 5b, the master stations 1a and 1b process the upstream data (to be used as internal data) received from the n slave stations 2-1 to 2-n by way of the buffers 8. It should be noted that the outputs from the logical OR circuits 5a and 5b are transmitted into each of the slave stations 2-1 to 2-n by way of the tristate buffers 6a and 6b as the collision detecting signal 12. The slave stations 2-1 to 2-n compare the collision detecting signal 12 with the external data D1 to Dn, respectively, transmitted by the slave stations 2-1 to 2-n themselves in order to carry out collision detection.

As described above, the fourth embodiment is configured such that the upstream serial buses 4-1 to 4-n are each dedicated for a respective one of the slave stations, eliminating the need for employing the pull-up resistance 11 for wired-OR connection. Therefore, it is possible to realize reduced power consumption and high-speed data transfer.

Industrial Applicability

In the data transfer systems of the present invention described above, the data line used to transmit data from the master stations to the slave stations and the line used to detect bus contention between the master stations are set independently of each other, or the data line used to transmit data from the slave stations to the master stations and the line used to detect bus contention between the slave stations are set independently of each other. With this arrangement, it is possible to realize reduced power consumption and high-speed data transfer.

## Claims

1. A data transfer system comprising:

   a first master station including: a first logical OR circuit for receiving first data and further receiving second data through a buffer from the outside; and a first collision detection circuit for comparing an output of said first logical OR circuit with said first data to carry out data collision detection, to thus send out the output of said first logical OR circuit through a first tristate buffer;
   a second master station including: a second logical OR circuit for receiving said second data and further receiving said first data through a buffer from the outside; and a second collision detection circuit for comparing an output of said second logical OR circuit with said second data to carry out data collision detection, to thus send out the output of said second logical OR circuit through a second tristate buffer; and
   a plurality of slave stations connected to said first master station and said second master station through a serial bus,

   wherein said first data and said second data to said slave stations are serially transmitted through said serial bus while carrying out data collision detection between said first master station and said second master station.

2. The data transfer system according to claim 1, wherein one of said first logical OR circuit and said second logical OR circuit performs logical OR operation on output data from one of said first master station and said second master station which does not include said one of said first logical OR circuit and said second logical OR circuit, and thereafter the first and second data is transferred to the slave stations.

3. A data transfer system comprising:

   a first master station including a first collision detection circuit;
   a second master station including a second collision detection circuit; and
   a plurality of slave stations including logical OR circuits connected to said first master station through a buffer and a serial bus;

   wherein said first collision detection circuit compares first data with second data obtained through a buffer, and said second collision detection circuit compares said second data with said first data obtained through a buffer, to thereby carry out data collision detection.

4. The data transfer system according to claim 3, wherein data collision is detected between said first master station and said second master station, and data transmission is carried out to said slave stations independently; and said logical OR circuits included in said slave stations perform logical OR operation.

5. A data transfer system comprising:

   a plurality of slave stations each including a collision detection circuit;
   a master station including a tristate buffer;
   a first signal line for serially transmitting internal data from said plurality of slave stations to said master station; and
   a second signal line connected to said collision detection circuit, wherein in order to detect data collision between these slave stations, said collision detection circuit compare external data with a collision detecting signal transferred to said slave station by way of said tristate buffer included in said master station.

6. The data transfer system according to claim 5, further comprising a pull-up resistance connected to the first signal line.

7. The data transfer system according to claim 5, wherein the master station includes a logical OR circuit for performing logical OR operation on data transmitted from the plurality of slave stations.

8. The data transfer system according to claim 7, wherein said first signal line includes a plurality of lines each independently connecting said plurality of slave stations and said master station.

# FIG.1

MASTER STATION 1a
Da
10
COLLISION DETECTION 9
8

MASTER STATION 1b
Db
10
COLLISION DETECTION 9
8

11
PULL-UP RESISTANCE

3 DOWNSTREAM SERIAL BUS

SLAVE STATION 2-1
8

SLAVE STATION 2-2
8

· · · · ·

SLAVE STATION 2-n
8

EP 1 265 401 A1

# FIG.2

PULL-UP RESISTANCE ~11

UPSTREAM SERIAL BUS  4

MASTER STATION  1a

MASTER STATION  1b

SLAVE STATION  2-1

COLLISION DETECTION ~9

D1

SLAVE STATION  2-2

COLLISION DETECTION ~9

D2

SLAVE STATION  2-n

COLLISION DETECTION ~9

Dn

EP 1 265 401 A1

# FIG.3

# FIG.4

EP 1 265 401 A1

# FIG.5

EP 1 265 401 A1

# FIG.6

PULL-UP RESISTANCE ~11

8

4 UPSTREAM SERIAL BUS

6a

MASTER STATION

1a

8

6b

MASTER STATION

1b

12 COLLISION DETECTING SIGNAL

8~▽  △~10
—D1
COLLISION DETECTION ~9
SLAVE STATION
2-1

8~▽  △~10
—D2
COLLISION DETECTION ~9
SLAVE STATION
2-2

. . . . .

8~▽  △~10
—Dn
COLLISION DETECTION ~9
SLAVE STATION
2-n

EP 1 265 401 A1

# FIG.7

MASTER STATION — LOGICAL "OR" 5a, 8a, 6a, 1a

MASTER STATION — LOGICAL "OR" 5b, 8b, 6b, 1b

UPSTREAM SERIAL BUS 4-n

UPSTREAM SERIAL BUS 4-2

UPSTREAM SERIAL BUS 4-1

COLLISION DETECTING SIGNAL 12

SLAVE STATION — COLLISION DETECTION 9 — D1 — 2-1

SLAVE STATION — COLLISION DETECTION 9 — D2 — 2-2

SLAVE STATION — COLLISION DETECTION 9 — Dn — 2-n

EP 1 265 401 A1

# EP 1 265 401 A1

| INTERNATIONAL SEARCH REPORT | International application No. |
|---|---|
| | PCT/JP01/00043 |

**A. CLASSIFICATION OF SUBJECT MATTER**
Int.Cl$^7$  H04L12/40

According to International Patent Classification (IPC) or to both national classification and IPC

**B. FIELDS SEARCHED**

Minimum documentation searched (classification system followed by classification symbols)
Int.Cl$^7$  H04L12/40

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 1-136442, A (Hitachi, Ltd.), 29 May, 1989 (29.05.89), Full text; all drawings  (Family: none) | 1-8 |
| A | JP, 62-2742, A (Toshiba Corporation), 08 January, 1987 (08.01.87), Full text; all drawings  (Family: none) | 1-8 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 March, 2001 (15.03.01) | 27 March, 2001 (27.03.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

14